# EUROPÄISCHE PATENTSCHRIFT

(11) **EP 0 885 604 B1**
(45) Veröffentlichungstag und Bekanntmachung des Hinweises auf die Patenterteilung: **29.12.2004**
(21) Anmeldenummer: 98810536.7
(22) Anmeldetag: 11.06.1998
(51) Int. Cl.: A61G 3/00, B64D 11/00

(54) **Patiententransporteinrichtung für Passagierfahrzeuge**
Patient transporting device for passenger vehicles
Dispositif de transport pour patients dans des véhicules

(30) Priorität: 14.06.1997 CH 144497
(43) Veröffentlichungstag der Anmeldung: 23.12.1998
(73) Patentinhaber: Bucher Leichtbau AG, 8117 Fällanden (CH)
(72) Erfinder: Thogersen, Lars, 2300 Kopenhagen (DK)

(56) Entgegenhaltungen:
- DE-B- 1 177 770
- DE-B- 1 217 022
- US-A- 2 337 505
- US-A- 4 115 884
- US-A- 5 259 575

## Beschreibung

Die Erfindung betrifft eine Patiententransporteinrichtung für Passagierfahrzeuge, insbesondere Passagierflugzeuge, welche über den Sitzreihen aufstellbar ist. Solche Einrichtungen zum Transport von Kranken, Verletzten oder Behinderten in Passagierflugzeugen sind z.B. als feste Installationen, die über Passagiersitzen aufgestellt werden können, bekannt. Das Aufstellen dieser festen Installationen ist jedoch noch relativ aufwendig, weil sie für den sicheren Transport auch unter sehr unruhigen Flugbedingungen mittels Verankerungsgurten, z.B. an vorderen und hinteren Sitzen, festgezurrt werden müssen. Vor allem aber dienen diese bekannten Vorrichtungen nur als Reisebett im Flugzeug, während für das Einund Ausladen von Patienten, z.B. von einem Zubringerfahrzeug in das Flugzeug hinein und am Ankunftsort wieder aus dem Flugzeug heraus, zusätzliche Tragen (Krankenbahren) benötigt werden. Dies ist relativ aufwendig und erfordert ein mehrmaliges Umbetten der Patienten. Überdies ist es kaum oder nur sehr schwer möglich, in kleineren Flugzeugen mit engeren und abgewinkelten Zugängen mit den bekannten Tragbahren von ausserhalb des Flugzeugs bis zu den Sitzreihen zu gelangen. Die bisherigen Transporteinrichtungen für Patienten in Passagierflugzeugen sind daher noch aufwendig, schwierig zu bedienen und auch für die Patienten umständlich und anstrengend.

Dies gilt auch für eine Transporteinrichtung gemäss US 4115884. Diese offenbart eine zusammenlegbare Grundstruktur (10, 12) und eine darauf fixierbare, tragbare Liegeeinrichtung (36) zum Ein- und Ausladen von Patienten. Diese Liegeeinrichtung weist einen festen umlaufenden Rahmen und einen neigbaren, einstellbaren Kopfteil mit einem Gelenk auf. Die Liegeeinrichtung ist jedoch nicht verkürzbar und auch nicht zusammenlegbar, da sie einen festen Rahmen aufweist.

Es ist daher Aufgabe der vorliegenden Erfindung, eine Patiententransporteinrichtung zu schaffen, welche diese bisherigen Nachteile überwindet und für einen wesentlich einfacheren und besseren Patiententransport von einem Zubringerfahrzeug ins Flugzeug bzw. in ein Langstreckenfahrzeug, während der Reise im Flugzeug und anschliessend am Ankunftsort wieder bis zu einem Abtransportmittel ausserhalb des Flugzeugs sorgt. Dies soll mit einfachen Geräten und wenig Aufwand einen sicheren und komfortablen Transport von Patienten, Kranken und Verunglückten ermöglichen. Die Transporteinrichtung soll überdies möglichst leicht und auf kompaktem Raum zusammenlegbar und verstaubar sein und während des Flugs auch unter unruhigen Bedingungen so stabil sein, dass auch starke Beschleunigungskräfte ausgehalten werden.

Diese Aufgabe wird gelöst mit einer Patiententransporteinrichtung gemäss Patentanspruch 1, welche aus wenigen Teilen einfach, leicht und stabil aufgebaut ist durch Kombination eines Grundgestells mit einer multifunktionalen Liegeeinrichtung. Das Grundgestell bildet eine einfache, selbsttragende, stabile und stosssicher verankerte Basis für die Liegeeinrichtung, wobei die Liegeeinrichtung an wenigen Verankerungsstellen mittels Fixierelementen einfach im Grundgestell ein- und ausklinkbar ist. Die Liegeeinrichtung ist selbsttragend und stabil aufgebaut, so dass sie sowohl als Zubringertrage für das Ein- und Ausladen wie auch, im Grundgestell verankert, als Reisebett dient. Die Liegevorrichtung ist zudem einstellbar ausgebildet, so dass sie sowohl während der Reise als Bett optimalen Komfort für den Patienten sicherstellt wie auch als Trage beim Ein- und Ausladen so verkürzbar ist, dass der Zugang auch unter sehr engen räumlichen Verhältnissen keine Probleme darstellt. Überdies ist die ganze Transporteinrichtung einfach zusammenlegbar und damit bei Nichtgebrauch auf sehr kompaktem Raum verstaubar.

Die erfindungsgemässe Transporteinrichtung eignet sich dank besonders leichter, kompakter und stabiler Ausführung vor allem für Passagierflugzeuge und insbesondere auch für kleinere Flugzeuge mit entsprechend engen Zugangs- und Platzverhältnissen. Sie ist aber auch einsetzbar in anderen Personenverkehrsmitteln mit Sitzreihen, z.B. in Reisebussen oder Schienenfahrzeugen, wo sie im Bedarfsfall über den Sitzen einfach montierbar ist mit analogen Vorteilen gegenüber bekannten Patiententransporteinrichtungen.

Die abhängigen Patentansprüche betreffen vorteilhafte Weiterentwicklungen der Erfindung mit besonders stabilen, leichten und einfach zu bedienenden Ausführungen sowie mit universellen Einstellmöglichkeiten für optimalen Komfort und patientengerechte Lage während der Reise als auch zum Ein- und Ausladen am Flugzeug. Einfache und leicht zu bedienende Verbindungselemente ermöglichen eine rasche Montage und das Verstauen auf kleinstem Raum und kraftausübende Einstellelemente der Liegevorrichtung, welche vom Patienten selber bedienbar sind, sowie eine Reihe von am Grundgestell anbringbaren Zusatzgeräten ergeben bestmögliche Patientenbetreuung und Komfort.

Im folgenden wird die Erfindung anhand von Ausführungsbeispielen und Figuren weiter erläutert, dabei zeigen
- Fig. 1 - 3: in drei Ansichten, von der Seite, von oben und von vorn, eine erfindungsgemässe Patiententransporteinrichtung mit Grundgestell und Liegeeinrichtung,
- Fig. 4: eine Variante mit Zusatzinstallationen am Grundgestell,
- Fig. 5: perspektivisch eine Liegeeinrichtung als Trage,
- Fig. 6: in Seitenansicht eine Liegeeinrichtung mit Stützstruktur und Einstellelementen,
- Fig. 7: eine Liegeeinrichtung in zusammengelegtem Zustand,
- Fig. 8: eine verkürzte Liegeeinrichtung als Trage zum Ein- und Ausladen eines Patienten,
- Fig. 9: eine Liegeeinrichtung mit 3 Teilen und 2 Gelenken,
- Fig. 10: von oben gesehen einen Rechteckrahmen als Stützstruktur einer Liegeeinrichtung.

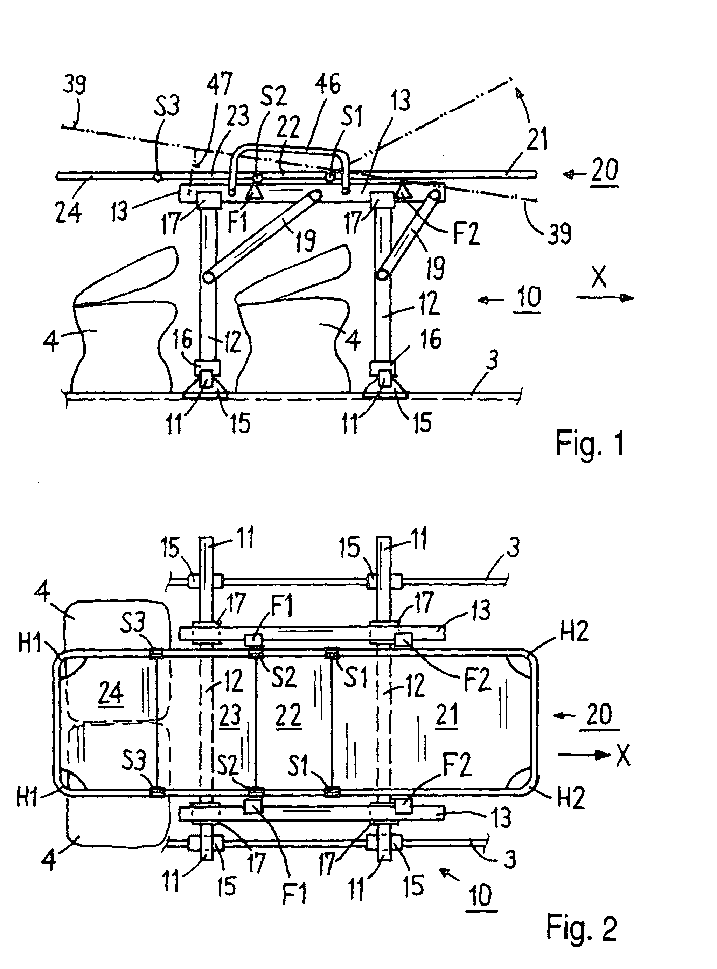

Die Figuren 1 bis 3 zeigen in drei Ansichten, von der Seite, von oben und von vorn, eine erfindungsgemässe Patiententransporteinrichtung, welche über Sitzreihen bzw. Sitzen 4 eines Flugzeugs aufstellbar ist, wobei die Rücklehnen der Sitze 4 vorzugsweise heruntergeklappt werden. Die Patiententransporteinrichtung besteht aus zwei separaten Teilen: einem Grundgestell 10 und einer Liegeeinrichtung 20.

Das Grundgestell besteht in diesem Beispiel aus zwei an Sitzschienen 3 des Flugzeugbodens fixierbaren unteren Querbalken 11, aus damit verbundenen zwei vertikalen Stützen 12 sowie aus zwei oberen Längsbalken 13, welche mittels Einstell- und Fixierelementen 15, 16, 17 relativ zueinander einstellbar und auch fixierbar sind. Die Lage des unteren Querbalkens kann dabei in den Sitzschienen 3 mittels den Fixierelementen 15 eingestellt und fixiert werden, die vertikalen Stützen 12 sind durch die Fixierelemente 16 mit den unteren Querbalken 11 und durch die Fixierelemente 17 mit den oberen Längsbalken 13 einstellbar und fixierbar verbunden. Mit den Fixierelementen 15 werden somit entsprechend der Lage der Sitzschienen 3 die Querbalken 11 optimal zwischen den Sitzen 4 positioniert. Mit den Fixierelementen 16 werden die Stützen 12 in Querrichtung zwischen den Sitzen 4 positioniert und mit den Fixierelementen 17 werden die Längsbalken 13 als Systemschienen in Längsrichtung X über den Sitzen in bestmögliche Lage eingestellt. Damit ist die ganze Transporteinrichtung optimal einstellbar in bezug auf die Anordnung der Sitze wie auch auf die Bedürfnisse des Patienten und allfällig benötigter Zusatzgeräte und Betreuungspersonen.

Die Liegeeinrichtung 20 weist einen Kopfteil 21, einen Mittelteil 22 und mindestens einen Fussteil (in diesem Beispiel zwei Fussteile 23, 24) auf, welche miteinander durch die Gelenke S1, S2, S3 verbunden sind, so dass die Lage von Kopfteil und Fussteil unter Einbezug einer Stützstruktur 26 einstellbar ist. Die Liegeeinrichtung 20 ist mittels lösbaren Fixierelementen F1,F2 an vier Stellen sicher und stabil mit dem Grundgestell 10 ein- und ausklinkbar verbunden. Damit kann die Liegeeinrichtung 10 sowohl als Bett während der Reise im Flugzeug eingesetzt sein, wenn sie im Grundgestell fixiert ist, wie auch als Zubringer-Trage (Stretcher), wenn die Fixierelemente gelöst sind. Zum Einsatz als Trage ist die Liegeeinrichtung überdies verkürzbar, so dass damit ein Patient auch unter besonders engen Platzverhältnissen mit abgewinkelten Zugängen sicher und komfortabel in das Flugzeug hinein und auch wieder hinaus getragen werden kann.

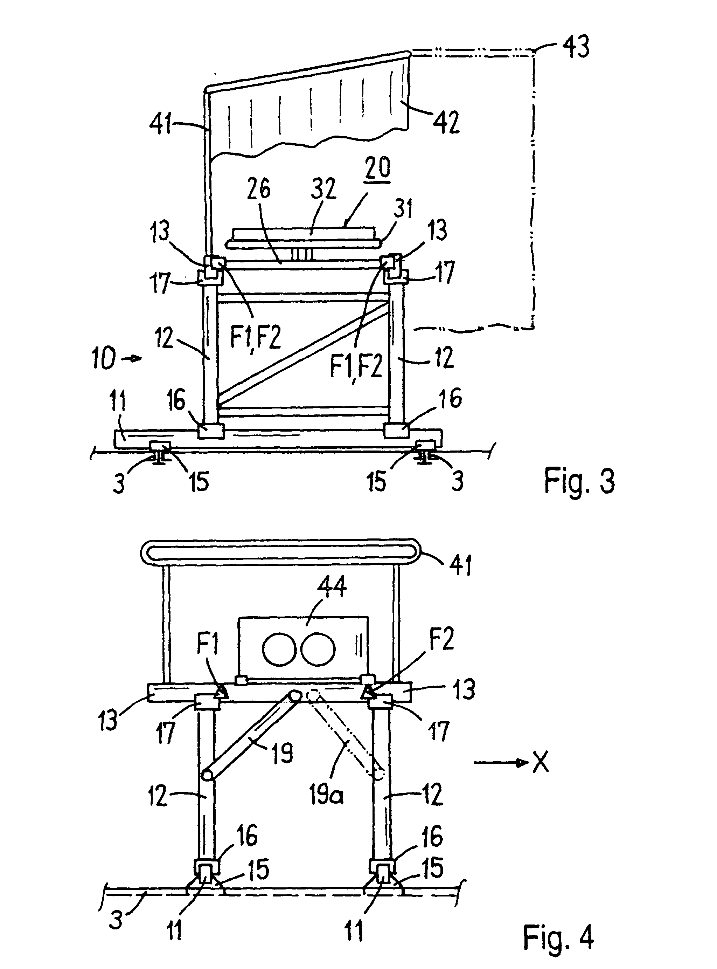

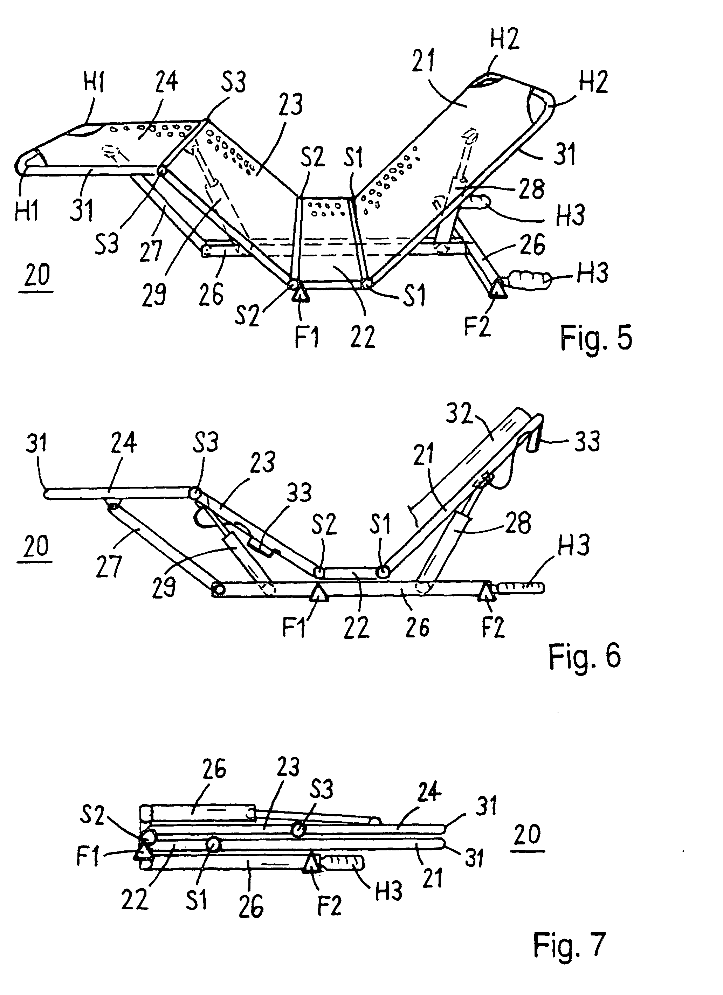

Frühere bekannte Transporteinrichtungen in Flugzeugen mussten während des Flugs mit Gurten aufwendig an den Sitzen verankert und gesichert werden. Die vorliegende erfindungsgemässe Patiententransporteinrichtung ist jedoch selbsttragend ausgebildet und nur mittels den Fixierelementen 15 an den Sitzschienen 3 stabil befestigt, ohne dass irgendwelche zusätzlichen Verankerungen notwendig wären. Eine besonders sichere Ausführung weist, wie in Fig. 1 und Fig. 4 ersichtlich ist, zudem abnehmbare schräge Fachwerkstreben 19, 19a auf, welche die vertikalen Stützen 12 mit den oberen Längsbalken 13 so verbinden und abstützen, dass auch hohe horizontale Beschleunigungen vor allem in Fahrrichtung X abgefangen werden können, welche in unruhigem Flugbetrieb, bei Stössen oder bei Unfällen auftreten. Es ist mit der erfindungsgemässen Transportvorrichtung möglich, Beschleunigungsstösse bis über 10 g mit einem daraufliegenden Patienten sicher abzustützen und zu halten. Für die oberen schrägen Stützen 19 ist zudem oberhalb der Sitze 4 genügend Platz vorhanden, während der knappere freie Raum zwischen den Sitzen unten so vollständig für die optimale Positionierung der Querbalken 11 und der Stützen 12 genutzt werden kann. Mit Vorteil werden überdies alle Gelenke, Verbindungs- und Fixierelemente der Transporteinrichtung spielfrei bzw. vorgespannt ausgebildet, so dass die ganze Konstruktion klapperfrei (rattle free) ist. Die ganze Transporteinrichtung ist zusammenlegbar ausgebildet, wobei vorzugsweise Schnellverschlüsse eingesetzt sind, welche ohne Werkzeuge und sogar von nur einer Person montierbar und demontierbar sind. Diese Einstell- und Montageelemente sind mit Vorteil gleich zu betätigen, z.B. als Druckknöpfe, welche zudem alle mit Farbe bezeichnet sein können zur einfachen Montage. Vorteilhafterweise sind die Liegeeinrichtung 20 und das Grundgestell 10 einzeln zusammenlegbar, wie dies für die Liegeeinrichtung in Fig. 7 beispielsweise gezeigt ist, und wobei das Grundgestell in die Elemente Querbalken 11, Stützen 12 und Horizontalbalken 13 zerlegbar ist, was damit insgesamt auch nur einen minimalen Stauraum zur Aufbewahrung erfordert. Dies ist besonders wichtig in Flugzeugen, wo der Platz sehr gut ausgenützt werden muss und wo es damit möglich ist, eine solche zusammengelegte Patiententransporteinrichtung als Notfallhilfe auch immer mitzuführen.

Figur 4 zeigt Beispiele von Zusatzgeräten und Installationen 44, welche am Grundgestell 10 bzw. an dessen Längsbalken 13 anbringbar sind. Somit dient der Längsbalken auch als Systemschiene. Eine alternative schräge Verbindungsstrebe 19a illustriert eine andere mögliche Anwendung zur Abstützung hoher horizontaler Verzögerungskräfte. Mit den Fixierelementen 17 sind die Längsbalken auf den Stützen 12 in verschiedenen Positionen fixierbar. (In Fig. 4 z.B. verschoben gegenüber der Lage in Fig. 1.) So können z.B. medizinaltechnische Geräte wie ein Inkubator oder eine Sauerstoffversorgung usw. in der richtigen Lage sicher fixiert werden. Fig. 4 und Fig. 3 zeigen zudem ein Vorhanggestänge 41 mit einem Vorhang 42, welcher nicht nur den Patienten selber, sondern bei Bedarf auch eine Betreuungsperson abschirmen kann durch Ausziehen (43) des Vorhanggestells. Als weitere Zusatzinstallationen können abnehmbare Haltegriffe 46 oder weitere Einstellelemente, z.B. eine einsetzbare Stütze 47 zur Einstellung einer Trendelenburg-Stellung 39 (Fig. 1) des Patienten im Falle von Kreislaufschwäche usw., eingesetzt werden. Damit werden in der Funktion als Reisebett möglichst optimale Bedingungen sowohl für den Patienten als auch für dessen Betreuung geschaffen.

Auf das Grundgestell 10 abgestimmt ist auch die Liegeeinrichtung 20 aus relativ wenigen Teilen bestehend, dennoch multifunktional ausgelegt. Das folgende Beispiel zeigt in perspektivischer Darstellung nach Fig. 5 und von der Seite gesehen nach Fig. 6 eine Liegeeinrichtung mit einem stabilen und leichten umlaufenden Rohrprofil als selbsttragender Trage-Rahmen 31, welcher an den vier Ecken, am Kopfteil und am Fussteil auch je zwei Handgriffe H1, H2 bildet. Die Flächen der Teile 21 - 24 sind z.B. als leichte gelochte Aluminiumschale ausgebildet, auf welche eine Matratze 32 aufliegt. Dieses Beispiel einer vierteiligen Liegeeinrichtung weist einen Kopfteil 21, einen Mittelteil 22 und zwei Fussteile 23, 24 sowie drei Einstellgelenke S1, S2, S3 auf zur universellen Einstellung der Liegeeinrichtung in ihren beiden Funktionen als Bett und als Trage. Kopfteil und Fussteile sind in diesem Beispiel auf eine kurze, leichte Stützstruktur 26 (hier T-förmig ausgebildet) abgestützt. An dieser Stützstruktur sind zudem ein weiteres Paar von Handgriffen H3 wie auch eine Fixiervorrichtung F2 zum Einklinken im Grundgestell 10 angebracht. Die andere Fixiervorrichtung F1 ist hier am Rahmen 31 angebracht, um damit eine stabile Verankerung der ganzen Liegeeinrichtung 20 im Grundgestell 10 sicherzustellen.

An der Struktur 26 sind auch eine bewegliche Stütze 27 zur Führung des unteren Fussteils 24 sowie kraftausübende Einstellelemente 28 und 29 zur Einstellung von Kopf- und Fussteilen abgestützt. Diese bestehen z.B. aus inkrementalen Gasdruckfedern, welche stufenlos einstellbar und verriegelbar sind. Dazu dienen Betätigungselemente 33, z.B. in Form von Griffen, welche über Kabelzüge mit den Einstellelementen 28, 29 verbunden sind. Vorzugsweise sind diese Betätigungsgriffe 33 vom Patienten selber bedienbar, so dass er während der Reise jederzeit eine optimale Lage finden und einstellen kann - wie dies einem Spitalbettlift entspricht.

Figur 7 zeigt als Beispiel eine Liegevorrichtung nach Fig. 6 in zusammengelegtem Zustand, welche hier in der Mitte um das Gelenk S2 des Tragerahmens 31 und um ein Gelenk der Stützstruktur 26 flach zusammengeklappt wird. Damit wird eine reduzierte Dimension von halber Länge L1 und nur ca. 10 cm Dicke erreicht. Auch das Grundgestell ist einfach zusammenlegbar, indem dessen Querbalken 11, Stützen 12 und Längsbalken 13 durch Lösen der Fixierelemente 15, 16, 17 voneinander separierbar sind. Auch eine Teilzerlegung, bei der die Stützen 12 noch mit den Querbalken 11 verbunden bleiben, genügt, um das demontierte Grundgestell 10 auf ein sehr kompaktes Volumen zum Verstauen zu reduzieren.

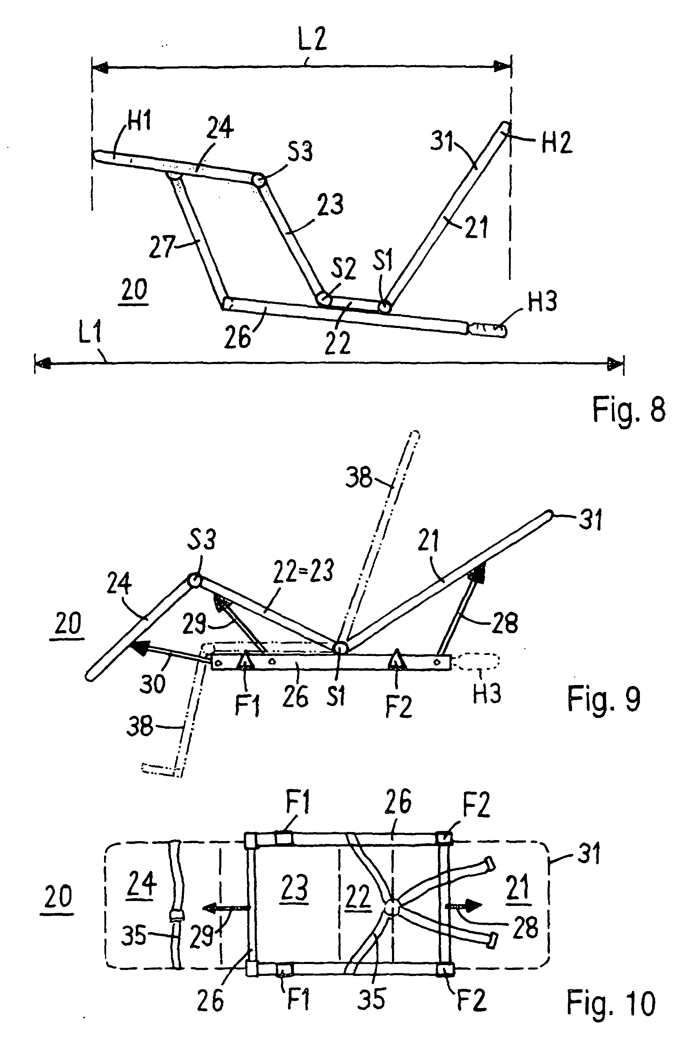

Figur 8 illustriert die mögliche Verkürzung der Liegeeinrichtung 20 für den Einsatz als Trage unter sehr engen Raumverhältnissen. Durch Anheben von Kopfteil 21 und Fussteilen 23, 24 kann die Länge der Liegeeinrichtung, welche in gestrecktem Zustand L1 beträgt, auf eine um z.B. 30 - 40% reduzierte Länge L2 gebracht werden. Auch eine mögliche Variante "Rollstuhlstellung" 38 (wheel chair) nach Fig. 9 ergibt eine massive Verkürzung der Tragelänge. Zudem können beispielsweise die Handgriffe H3 an der Stützsttuktur 26 auch abnehmbar oder einklappbar sein, da ja am Rahmen 31 noch die Handgriffe H2 zum Tragen zur Verfügung stehen.

Figur 9 zeigt ein weiteres Beispiel einer Liegevorrichtung, welche aus nur drei Teilen, Kopfteil 21, Mittelteil 22 und Fussteil 24 mit zwei Verbindungsgelenken S 1 und S3 besteht. Hier ist also der Mittelteil 22 und der obere Fussteil 23 von Fig. 6 in einen Teil zusammengefasst. Diese drei Teile 21, 22, 24 sind hier mittels dreier kraftausübender Einstellelemente 28, 29, 30 einstellbar und fixierbar analog zu der Darstellung in Fig. 6.

Figur 10 zeigt als weiteres Beispiel einen kurzen und kompakten Rechteckrahmen als Stützstruktur 26. Dies ermöglicht eine sehr günstige Kraftaufnahme der an diesem Rechteckrahmen angebrachten Fixierelemente F1, F2. Auch Befestigungsgurten 35 für den Patienten werden an der selbsttragenden Stützstruktur 26 und am Tragerahmen 31 sicher verankert.

Der Aufbau der erfindungsgemässen Transporteinrichtung aus nur wenigen Elementen und unter Verwendung von Rohrprofilen und Fachwerkstrukturen ermöglicht gleichzeitig ein sehr tiefes Gewicht und hohe Stabilität mit grosser Stoss-Sicherheit vor allem in Fahrrichtung X. Vorzugsweise kann die ganze Struktur aus Leichtmetall, insbesondere aus Aluminium-Legierungen aufgebaut sein, womit ein Gesamtgewicht von weniger als 50 kg erreicht werden kann, z.B. für Grundgestell und Liegeeinrichtung je ca. 15 - 20 kg und total für die ganze Transporteinrichtung nur 30 - 40 kg. Besonders leicht und einfach herstellbar ist auch eine Ausführung aus Faserverbundwerkstoffen, z.B. aus kohle- oder glasfaserverstärkten Thermoplasten, welche ebenfalls Rohrprofile für den Tragerahmen 31 und das Grundgestell 10 sowie eine integrierte Gewebeverbundfläche der Liegeeinrichtung 20 aufweisen können.

## Patentansprüche

1. Patiententransporteinrichtung (1) für Passagierfahrzeuge insbesondere Passagierflugzeuge, welche über Sitzreihen aufstellbar ist,
mit einem Grundgestell (10) mit vertikalen Stützen (12), welches an Sitzschienen (3) des Flugzeugs einstellbar fixierbar ist, und
mit einer mindestens dreiteiligen Liegeeinrichtung (20) mit einem Kopfteil (21), einem Mittelteil (22) und einem Fussteil (23, 24), welche miteinander durch Gelenke (S1, S2, S3) verbunden und gegeneinander verschwenkbar sind, so dass der Kopfteil (21) gegen den Mittelteil (22) durch ein Gelenk (S1) und der Mittelteil gegen den Fussteil (23, 24) durch ein Gelenk (S2, S3) verschwenkbar und damit einstellbar und auch fixierbar sind mittels einer Stützstruktur (26) und Einstellelementen (28 - 30) der Liegeeinrichtung (20) und mit Handgriffen (H1, H2, H3)
sowie mit lösbaren Fixierelementen (F1, F2) mit denen die Liegeeinrichtung (20) am Grundgestell (10) fixierbar ist, wobei die Liegeeinrichtung im Grundgestell fixiert als Bett dient und mit gelösten Fixierelementen als Trage zum Ein- und Ausladen eines Patienten einsetzbar ist,
wobei die Liegeeinrichtung (20) als Trage verkürzbar und in jeder gewünschten Lage von Kopfteil, Mittelteil und Fussteil fixierbar ist und wobei sowohl das Grundgestell (10)als auch die Liegeeinrichtung (20) zusammenlegbar ausgebildet sind.

2. Transporteinrichtung nach Anspruch 1, **dadurch gekennzeichnet, dass** das Grundgestell an den Sitzschienen (3) fixierbare untere Querbalken (11), damit verbundene vertikale Stützen (12) und obere horizontale Längsbalken (13) aufweist, welche mittels Einstell- und Fixierelementen (15, 16, 17) einstellbar und fixierbar sind.

3. Transporteinrichtung nach Anspruch 1, **gekennzeichnet durch** schräge Verbindungsstreben (19) zwischen den Stützen (12) und den Längsbalken (13) zur Abstützung horizontaler Beschleunigungskräfte.

4. Transporteinrichtung nach Anspruch 1, **dadurch gekennzeichnet, dass** alle Gelenke, Verbindungs- und Fixierelemente (S1 - S3, F1, F2, 15 - 17) spielfrei bzw. vorgespannt und damit klapperfrei ausgebildet sind.

5. Transporteinrichtung nach Anspruch 1, **dadurch gekennzeichnet, dass** Zusatzgeräte (44), z.B. ein Inkubator, am Grundgestell fixierbar sind.

6. Transporteinrichtung nach Anspruch 1, **dadurch gekennzeichnet, dass** ein Vorhanggestänge (41) mit Vorhang (42) am Grundgestell fixierbar ist.

7. Transporteinrichtung nach Anspruch 1, **dadurch gekennzeichnet, dass** abnehmbare Haltegriffe (46) am Grundgestell fixierbar sind.

8. Transporteinrichtung nach Anspruch 1, **dadurch gekennzeichnet, dass** die Liegeeinrichtung 20 einen Tragerahmen (31) als umlaufendes Rohrprofil mit den Handgriffen (H1, H2) aufweist.

9. Transporteinrichtung nach Anspruch 1, **dadurch gekennzeichnet, dass** die Liegeeinrichtung eine kurze T-förmige Stützstruktur (26) aufweist.

10. Transporteinrichtung nach Anspruch 1, **dadurch gekennzeichnet, dass** der Kopfteil und der Fussteil mittels kraftausübenden Einstellelementen (28, 29), z.B. in Form von Gasdruckfedern, einstellbar und fixierbar sind.

11. Transporteinrichtung nach Anspruch 10, **dadurch gekennzeichnet, dass** die Einstellelemente (28, 29) mittels Betätigungsgriffen (33) vom Patienten selber bedienbar sind.

12. Transporteinrichtung nach Anspruch 1, **dadurch gekennzeichnet, dass** an der Liegeeinrichtung Befestigungsgurten (35) angebracht sind zum sicheren Transport eines Patienten.

13. Transporteinrichtung nach Anspruch 1, **dadurch gekennzeichnet, dass** die Liegeeinrichtung im Grundgestell auch in einer Trendelenburg-Stellung (39) fixierbar ist.

14. Transporteinrichtung nach Anspruch 1, **dadurch gekennzeichnet, dass** die Liegeeinrichtung (20) in einer Rollstuhlstellung (38) fixierbar ist.

15. Transporteinrichtung nach Anspruch 1, **dadurch gekennzeichnet, dass** das Grundgestell (10) und die Liegeeinrichtung (20) einzeln zusammenlegbar sind.

16. Transporteinrichtung nach Anspruch 1, **dadurch gekennzeichnet, dass** sie ohne Werkzeuge mittels Schnellverschlüssen montierbar und demontierbar ist.

17. Transporteinrichtung nach Anspruch 1, **dadurch gekennzeichnet, dass** sie aus Leichtmetall bzw. Aluminium besteht.

18. Transporteinrichtung nach Anspruch 1, **dadurch gekennzeichnet, dass** sie aus Faserverbundwerkstoffen besteht, z.B. aus kohle- oder glasfaserverstärkten Thermoplasten.

## Claims

1. Patient transporting device (1) for passenger vehicles, in particular for passenger aircraft, which is capable of being installed above seat rows, with a base frame (10) with vertical supports (12), which is fixed to seat tracks (3) of the aircraft capable of being adjusted, and with
a stretcher system (20), comprising at least three parts, with a head part (21), a central part (22) and a foot part (23, 24), which are connected together by means of joints (S1, S2, S3) and capable of being swivelled relative to one another, so that the head part (21) is capable of being swivelled relative to the central part (22) by means of a joint (S1) and the central part relative to the foot part (23, 24) by means of a joint (S2, S3) and with this are adjustable and also fixable by means of a supporting structure (26) and adjusting elements (28 - 30) of the stretcher system (20) and with handles (H1, H, H3)
as well as with releasable fixing elements (F1, F2), with which the stretcher system (20) is capable of being fixed to the base frame (10), wherein the stretcher system fixed in the base frame serves as a bed and with released fixing elements is utilisable as a stretcher for the loading and unloading of a patient,
wherein the stretcher system (20) is capable of being shortened as a stretcher and is fixable in any required position of head part, central part and foot part and wherein both the base frame (10) as well as the stretcher system (20) are designed to be foldable.

2. Transporting device according to claim 1, **characterised in that** the base frame comprises lower transverse beams (11) capable of being fixed to the seat tracks (3), vertical supports (12) connected with them and upper horizontal longitudinal beams (13), which are capable of being adjusted and fixed by means of adjusting - and fixing elements (15, 16, 17).

3. Transporting device according to claim 1, **characterised by** diagonal connecting struts (19) between the supports (12) and the longitudinal beams (13) for the absorbing of horizontal acceleration forces.

4. Transporting device according to claim 1, **characterised in that** all joints, connecting - and fixing elements (S1 - S3, F1, F2, 15 - 17) are designed to be free of play, resp., are pre-stressed and therefore non-rattling.

5. Transporting device according to claim 1, **characterised in that** additional devices (44), e.g., an incubator, are capable of being fixed to the base frame.

6. Transporting device according to claim 1, **characterised in that** a curtain holder (41) with a curtain (42) is capable of being fixed to the base frame.

7. Transporting device according to claim 1, **characterised in that** removable handles (46) are capable of being fixed to the base frame.

8. Transporting device according to claim 1, **characterised in that** the stretcher system (20) comprises a stretcher frame (31) as a surrounding tubular profile with the handles (H1, H2).

9. Transporting device according to claim 1, **characterised in that** the stretcher system comprises a short T-shaped supporting structure (26).

10. Transporting device according to claim 1, **characterised in that** the head part and the foot part are capable of being adjusted and fixed by means of force exerting adjusting elements (28, 29), e.g., in the form of gas pressure springs.

11. Transporting device according to claim 10, **characterised in that** the adjusting elements (28, 29) are capable of being operated by the patient himself by means of actuating grips (33).

12. Transporting device according to claim 1, **characterised in that** fixing straps (35) are attached to the stretcher system for a safe transportation of a patient.

13. Transporting device according to claim 1, **characterised in that** the stretcher system is also capable of being fixed in a "Trendelenburg" position (39) in the base frame.

14. Transporting device according to claim 1, **characterised in that** the stretcher system (20) is capable of being fixed in a wheel-chair position (38).

15. Transporting device according to claim 1, **characterised in that** the base frame (10) and the stretcher system (20) are capable of being individually folded.

16. Transporting device according to claim 1, **characterised in that** it is capable of being installed and dismantled without tools by means of rapid-action closures.

17. Transporting device according to claim 1, **characterised in that** it consists of light alloy, resp., aluminium.

18. Transporting device according to claim 1, **characterised in that** it consists of fibre composite materials, e.g., of carbon- or glass fibre-reinforced thermoplastic materials.

## Revendications

1. Dispositif de transport (1) de malades pour des véhicules de transport de passagers, en particulier pour des avions, lequel peut être mis en place au-dessus des travées de sièges, comportant
un cadre de base (10) muni de barres verticales (12), qui peuvent être fixées de manière réglable contre des glissières de siège (3) de l'avion, et
un système de couchage (20) ayant au moins trois parties comportant une partie de tête (21), une partie centrale (22) et une partie de pied (23, 24), lesquelles sont assemblées entre elles par des joints articulés (S1, S2, S3) et peuvent être pivotées par rapport entre elles, de telle sorte que la partie de tête (21) peut être pivotée par rapport à la partie centrale (22) par un joint (S1) et la partie centrale peut être pivotée par rapport à la partie de pied (23, 24) par un joint (S2, S3) et sont donc réglables et peuvent aussi être fixées au moyen d'une structure de support (26) et des éléments de réglage (28-30) du système de couchage (20) et avec des poignées (H1, H2, H3),
ainsi que des éléments de fixation (F1, F2) pouvant être libérés, par lesquels le système de couchage (20) peut être fixé contre le cadre de base (10), le système de couchage étant utilisable sous forme de lit lorsqu'il est fixé dans le cadre de base et étant utilisable sous forme de civière, destinée au chargement et déchargement d'un patient, lorsque les éléments de fixation sont libérés,
le système de couchage (20) utilisé comme civière pouvant être raccourci et pouvant être fixé dans chaque position désirée de la partie de tête, de la partie centrale et de la partie de pied et le cadre de base (10) ainsi que le système de couchage (20) étant conçus de façon pliable.

2. Dispositif de transport selon la revendication 1, **caracterisé en ce que** le cadre de base comporte des barres transversales inférieures (11), qui peuvent être fixées contre les glissières de siège (3), des montants verticaux (12), assemblés avec lesdites barres, et des barres longitudinales supérieures (13), qui peuvent être reglées l'une par rapport à l'autre et fixées au moyen d'éléments de réglage et de fixation (15, 16, 17).

3. Dispositif de transport selon la revendication 1, **caractérisé par** des barres d'assemblage inclinées (19) entre les montants (12) et les barres longitudinales (13), destinées à absorber des accélérations horizontales.

4. Dispositif de transport selon la revendication 1, **caracterisé en ce que** tous les joints articulés, les éléments d'assemblage et de fixation (S1-S3, F1, F2, 15-17) sont conçus sans jeu et précontraints et, de ce fait, sans émettre de cliquètements.

5. Dispositif de transport selon la revendication 1, **caractérisé en ce que** des accessoires supplémentaires (44), tels qu'un incubateur, peuvent être fixés contre le cadre de base.

6. Dispositif de transport selon la revendication 1, **caractérisé en ce que** des tringles à rideau (41) munies d'un rideau (42) peuvent être fixées contre le cadre de base.

7. Dispositif de transport selon la revendication 1, **caracterisé en ce que** des poignées amovibles (46) peuvent être fixées contre le cadre de base.

8. Dispositif de transport selon la revendication 1, **caracterisé en ce que** le système de couchage (20) comporte un cadre de brancard (31) formé par un profilé tubulaire entourant munis des poignées (H1, H2).

9. Dispositif de transport selon la revendication 1, **caracterisé en ce que** le système de couchage comporte une courte structure de support (26) en forme de T.

10. Dispositif de transport selon la revendication 1, **caracterisé en ce que** la partie de tête et la partie de pied peuvent être réglées et fixées par des éléments de réglage (28, 29) à force motrice, par exemple sous forme de ressorts sous pression de gaz.

11. Dispositif de transport selon la revendication 10, **caracterisé en ce que** les éléments de réglage (28, 29) peuvent être commandés par le patient au moyen de manettes (33).

12. Dispositif de transport selon la revendication 1, **caracterisé en ce que** des sangles de fixation (35) sont fixées contre le système de couchage, afin de transporter le patient de manière sûre.

13. Dispositif de transport selon la revendication 1, **caracterisé en ce que** le système de couchage peut aussi être bloqué dans le cadre de base dans une position de Trendelenburg (39).

14. Dispositif de transport selon la revendication 1, **caracterisé en ce que** le système de couchage (20) peut être bloqué dans une position de fauteuil roulant (38).

15. Dispositif de transport selon la revendication 1, **caracterisé en ce que** le cadre de base (10) et le système de couchage (20) peuvent être pliés séparément.

16. Dispositif de transport selon la revendication 1, **caracterisé en ce que** ledit dispositif peut être monté et démonté sans outils au moyen de systèmes de fixation à fermeture immédiate.

17. Dispositif de transport selon la revendication 1, **caracterisé en ce que** ledit dispositif est réalisé en métal léger ou en aluminium.

18. Dispositif de transport selon la revendication 1, **caracterisé en ce que** ledit dispositif est réalisé en matériaux composites renforcés par fibres, tels que des thermoplastiques renforcés par des fibres de carbone ou des fibres de verre.
